# EUROPEAN PATENT APPLICATION

(11) **EP 4 368 873 A1**
(43) Date of publication of application: **15.05.2024**
(21) Application number: 22837532.5
(22) Date of filing: 28.06.2022
(51) Int. Cl.: F17C 3/04, B63B 25/16

(54) **SHIP AND LIQUEFIED HYDROGEN TANK**

(30) Priority: 05.07.2021 JP 2021111724
(71) Applicant: KAWASAKI JUKOGYO KABUSHIKI KAISHA, Kobe-shi, Hyogo 650-8670 (JP)
(72) Inventor: SHIMODA, Taichiro, Kobe-shi, Hyogo 650-8670 (JP); TOMINAGA, Haruhiko, Kobe-shi, Hyogo 650-8670 (JP); TAKAHASHI, Tsuneo, Kobe-shi, Hyogo 650-8670 (JP); YOKOYAMA, Genki, Kobe-shi, Hyogo 650-8670 (JP); TANAKA, Shin, Kobe-shi, Hyogo 650-8670 (JP); KOZAKI, Daisuke, Kobe-shi, Hyogo 650-8670 (JP); KANO, Daichi, Kobe-shi, Hyogo 650-8670 (JP); HOSONO, Takamichi, Kobe-shi, Hyogo 650-8670 (JP)
(74) Representative: Arnold & Siedsma
(86) International application number: PCT/JP2022/025642
(87) International publication number: WO 2023/282116

(57) **Abstract**

A liquefied hydrogen tank includes: an inner tank storing liquefied hydrogen; an outer tank surrounding the inner tank; an outer shell surrounding the outer tank; a first heat insulating layer located in a first region between the inner tank and the outer tank; and a second heat insulating layer located in a second region between the outer tank and the outer shell. The first region is filled with a first gas that is a hydrogen gas or a helium gas. The first region has substantially atmospheric pressure or is in a low vacuum state. The second region is filled with a second gas including at least one of an inactive gas or dry air. With the liquefied hydrogen stored in the inner tank, a temperature of the outer tank is a predetermined outer tank control temperature that is higher than a condensation point of oxygen and not more than an atmospheric temperature.

## Description

### Technical Field

The present disclosure relates to a liquefied hydrogen tank and a ship on which the liquefied hydrogen tank is mounted.

### Background Art

A liquefied hydrogen tank including a vacuum heat insulating structure has been known. For example, a liquefied gas retaining tank disclosed in PTL 1 includes: an inner tank storing a cryogenic liquefied gas, such as liquefied hydrogen; an outer tank covering the inner tank; a vacuum region heat insulating layer located between the inner tank and the outer tank; and an emergency heat insulating layer covering an outer surface of the outer tank. A region between the inner tank and the outer tank is in a high vacuum state. Typically, the high vacuum state denotes air pressure in a range from 10⁻¹ Pa to 10⁻⁵ Pa.

### Citation List

### Patent Literature

PTL 1: Japanese Laid-Open Patent Application Publication No. 2017-194166

### Summary of Invention

### Technical Problem

According to the liquefied gas retaining tank of PTL 1, the region between the inner tank and the outer tank is in the high vacuum state, and the vacuum region heat insulating layer is located between the inner tank and the outer tank. Therefore, heat convection, heat radiation, and heat conduction between the inner tank and the outer tank are suppressed, and the liquefied gas retaining tank of PTL 1 has high heat protection performance. However, it takes time to subject an inter-tank region having a huge volume to vacuum drawing, and this may become one factor that increases a time required for manufacture and a time required for maintenance. Moreover, to obtain vacuum resistance, a tank wall is required to have an adequate thickness, and this may become one factor that increases the tank weight.

On the other hand, when the above tank does not include the vacuum heat insulating structure, the heat protection performance between the inner tank and the outer tank is low, and therefore, the surface temperature of the outer tank may constantly become very low. When the surface temperature of the outer tank becomes very low, oxygen may condense and liquefy on the surface of the outer tank.

The present disclosure was made under these circumstances, and an object of the present disclosure is to suppress condensation of oxygen on a surface of an outer tank in a liquefied hydrogen tank which does not include a vacuum heat insulating structure in an inter-tank region between an inner tank and the outer tank.

### Solution to Problem

A liquefied hydrogen tank according to one aspect of the present disclosure includes:
an inner tank storing liquefied hydrogen;
an outer tank surrounding the inner tank;
an outer shell surrounding the outer tank;
a first heat insulating layer located in a first region between the inner tank and the outer tank; and
a second heat insulating layer located in a second region between the outer tank and the outer shell.

The first region is filled with a first gas that is a hydrogen gas or a helium gas.

The first region has substantially atmospheric pressure or is in a low vacuum state.

The second region is filled with a second gas including at least one of an inactive gas or dry air.

With the liquefied hydrogen stored in the inner tank, a temperature of the outer tank is a predetermined outer tank control temperature that is higher than a condensation point of oxygen and not more than an atmospheric temperature.

A ship according to one aspect of the present disclosure includes the above liquefied hydrogen tank.

### Advantageous Effects of Invention

The present disclosure can suppress the condensation of oxygen on the surface of the outer tank in the liquefied hydrogen tank which does not include the vacuum heat insulating structure in the inter-tank region between the inner tank and the outer tank.

### Brief Description of Drawings

FIG. 1 is a diagram showing a schematic configuration of a ship on which liquefied hydrogen tanks according to one embodiment of the present disclosure are mounted.
FIG. 2 is a diagram showing a transverse section of the ship.
FIG. 3 is a diagram showing a temperature distribution of a wall of the liquefied hydrogen tank.
FIG. 4 is a block diagram showing the configuration of an inspector that inspects an outer tank temperature of the liquefied hydrogen tank.

### Description of Embodiments

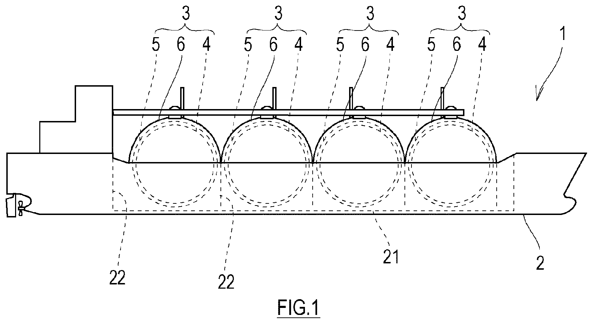

FIG. 1 is a schematic configuration diagram of a ship 1 on which liquefied hydrogen tanks 3 according to one embodiment of the present disclosure are mounted. The ship 1 shown in FIG. 1 includes a hull 2 and four liquefied hydrogen tanks 3 mounted on the hull 2. The liquefied hydrogen tanks 3 are cargo tanks for transportation of liquefied hydrogen. In the present embodiment, the liquefied hydrogen tanks 3 are lined up in a ship longitudinal direction. However, when the width of the ship is large, the liquefied hydrogen tanks 3 may be lined up in a ship width direction. Moreover, the number of liquefied hydrogen tanks 3 mounted on the hull 2 may be one or may be two or more, i.e., plural.

In the present embodiment, the four liquefied hydrogen tanks 3 are substantially the same in structure as each other. In the present embodiment, the liquefied hydrogen tank 3 is configured as a multilayer tank. However, when the liquefied hydrogen tanks 3 are mounted on the ship 1, these liquefied hydrogen tanks 3 may be different in structure as each other.

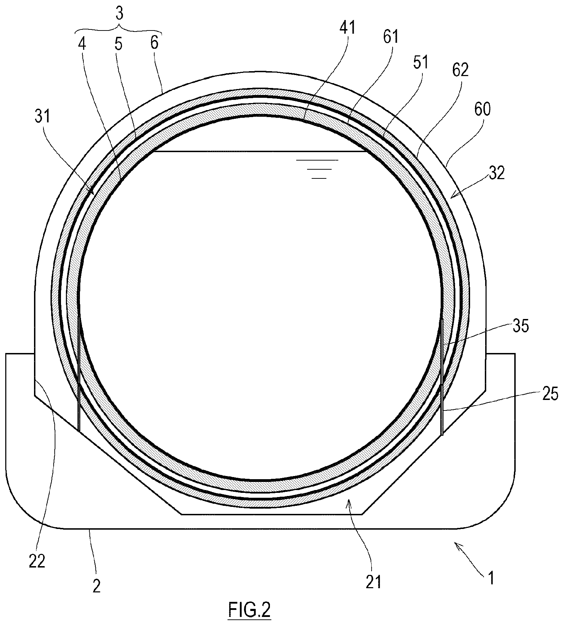

As shown in FIG. 2, the liquefied hydrogen tank 3 includes: an inner tank 4 storing the liquefied hydrogen; an outer tank 5 surrounding the inner tank 4; and an outer shell 6 surrounding the outer tank 5. The inner tank 4 and the outer tank 5 are spaced apart from each other in a tank thickness direction. An inter-tank region between the inner tank 4 and the outer tank 5 is referred to as a "first region 31." The outer tank 5 and the outer shell 6 are spaced apart from each other in the tank thickness direction. A region between the outer tank 5 and the outer shell 6 is referred to as a "second region 32."

The first region 31 is filled with a first gas and has substantially atmospheric pressure or is in a low vacuum state. The first gas is a hydrogen gas or a helium gas. The atmospheric pressure is about 10⁵ Pa. However, the pressure of the first region 31 may fluctuate due to temperature, rolling and pitching of the hull 2, and the like. Therefore, in the present description and the claims, "substantially atmospheric pressure" may denote not only about 10⁵ Pa but also air pressure higher than about 10⁵ Pa within a range of pressure fluctuation (for example, substantially atmospheric pressure higher than 1.0×10⁵ Pa and not more than 1.5×10⁵ Pa). Moreover, the low vacuum state denotes air pressure that is lower than the atmospheric pressure and is in a range from 10⁵ Pa to 10² Pa. When the first gas is the hydrogen gas, a gas phase portion of the inner tank 4 and the first region 31 may communicate with each other such that a vaporized gas generated in the inner tank 4 flows into the first region 31. The second region 32 is filled with a second gas and has substantially the atmospheric pressure. The pressure of the second region 32 may be higher than that of the first region 31 although this is not especially limited. The second gas includes at least one of an inactive gas, such as nitrogen, or dry air. For example, the second region 32 may be filled with the dry air, and a below-described second heat insulating layer 62 may retain the inactive gas.

The inner tank 4 includes a substantially spherical inner tank main body 41. The inner tank 4 may include an inner tank dome projecting upward from the inner tank main body 41.

The outer tank 5 includes a substantially spherical outer tank main body 51. The outer tank 5 may include an outer tank dome projecting upward from the outer tank main body 51. The outer tank main body 51 surrounds the inner tank main body 41. However, each of the inner tank main body 41 and the outer tank main body 51 does not necessarily have to be spherical and may have a cylindrical shape that is long in a horizontal direction or a cylindrical shape that is long in a vertical direction. Or, each of the inner tank main body 41 and the outer tank main body 51 may have a cube shape or a cuboid shape.

The hull 2 includes two cargo holds 21 that are open upward. The two cargo holds 21 are lined up in the ship longitudinal direction, and the cargo holds 21 are separated from each other by a wall 22. Then, a lower portion of the inner tank 4 and a lower portion of the outer tank 5 are accommodated in each cargo hold 21.

A pair of skirts 25 that are spaced apart from each other in the ship longitudinal direction are located in the cargo hold 21. The skirts 25 support the outer tank 5. Moreover, a pair of supports 35 supporting the inner tank main body 41 are located between the inner tank 4 and the outer tank 5. In the present embodiment, the skirt 25 is located on an extended line of the support 35. However, the positions of the supports 35 and the skirts 25 are not limited to the present embodiment.

A tank cover 60 is located above the outer tank 5. The tank cover 60 covers an upper portion of the corresponding outer tank 5. However, the upper portion of the outer tank 5 may be covered with a component of the hull 2. In the present embodiment, the outer shell 6 includes the tank cover 60 and the wall 22 that is a component of the hull 2 which forms the cargo hold 21.

### Heat Protection Structure of Liquefied Hydrogen Tank 3

The following will describe a heat protection structure included in the liquefied hydrogen tank 3 configured as above. The liquefied hydrogen tank 3 includes: a first heat insulating layer 61 in the first region 31 between the inner tank 4 and the outer tank 5; and a second heat insulating layer 62 in the second region 32 between the outer tank 5 and the outer shell 6.

In the present embodiment, the first heat insulating layer 61 includes planar thermal insulation covering an outer surface of the inner tank 4. The planar thermal insulation is film-shaped thermal insulation, panel-shaped thermal insulation, or sheet-shaped thermal insulation. Examples of the planar thermal insulation include an urethane foam panel, a phenol resin foam panel, an aerogel sheet, and sheet-shaped glass wool. A space where the planar thermal insulation do not exist in the first region 31 may be filled with powdered thermal insulation. The heat insulation performance of the first heat insulating layer 61 is adjustable by selecting the material of the planar thermal insulation, changing the thickness of the planar thermal insulation in a wall thickness direction, or adding the powdered thermal insulation.

In the present embodiment, the second heat insulating layer 62 includes the planar thermal insulation covering an outer surface of the outer tank 5. The heat insulation performance of the second heat insulating layer 62 is adjustable by selecting the material of the planar thermal insulation and changing the thickness of the planar thermal insulation in the wall thickness direction. The configurations of the first heat insulating layer 61 and the second heat insulating layer 62 are not limited to the present embodiment.

In the liquefied hydrogen tank 3 configured as above, it is desirable that the condensation of the first gas on the outer surface of the inner tank 4 and an inner surface of the outer tank 5 be suppressed. Therefore, the inter-tank region between the inner tank 4 and the outer tank 5 is filled with the first gas, such as the hydrogen gas or the helium gas, having a low condensation point. However, the heat conductivity of the hydrogen gas and the heat conductivity of the helium gas are significantly higher than the heat conductivity of air and the heat conductivity of nitrogen. Therefore, the heat protection performance of the thermal insulation located in the first region 31 is lower than the heat protection performance of the thermal insulation located in the second region 32. To be specific, under the condition that the total amount of thermal insulation located in the first region 31 and thermal insulation located in the second region 32 is fixed, the heat protection performance of the entire liquefied hydrogen tank 3 improves as a ratio of the thermal insulation located in the second region 32 increases. On the other hand, when the ratio of the thermal insulation located in the second region 32 is increased by increasing the amount of thermal insulation located in the second region 32 in order to improve the heat protection performance or reducing the amount of thermal insulation located in the first region 31 from the viewpoint of the cost effectiveness, the temperature of the outer tank 5 lowers. When the temperature of the outer tank 5 excessively lowers, a gas contained in the thermal insulation and a gas having entered through gaps of the thermal insulation condense. When such gas contains oxygen, liquid oxygen is generated on the surface of the outer tank 5. Since a combustible high-concentration oxygen gas region exists around the generated liquid oxygen, the condensation of the oxygen gas on the surface of the outer tank 5 is not preferable.

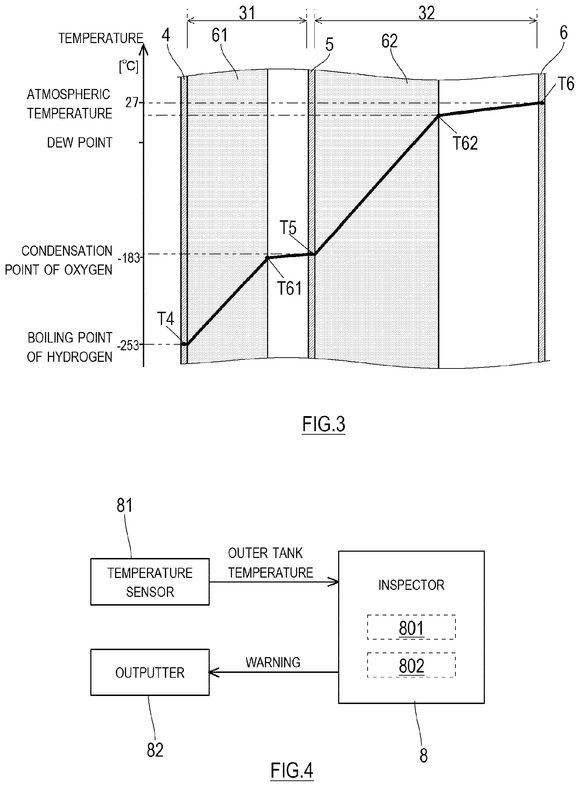

FIG. 3 is a diagram schematically showing a temperature distribution of the liquefied hydrogen tank 3 in the wall thickness direction from the inner tank 4 to the outer shell 6. A temperature of the inner tank 4 is an inner tank temperature T4. A temperature of an inner surface of the first heat insulating layer 61 is represented by T4, and a temperature of an outer surface of the first heat insulating layer 61 is represented by T61. The temperature of the first heat insulating layer 61 increases toward an outside from T4 to T61. A temperature of the outer tank 5 is an outer tank temperature T5, and T5 is equal to or higher than T61. Since the temperature difference between T5 and T61 is adequately small, T5 and T61 may be regarded as substantially the same temperature in calculation. An inner surface of the second heat insulating layer 62 contacts the outer surface of the outer tank 5 or is opposed to the outer surface of the outer tank 5 with a slight gap. The temperature of the inner surface of the second heat insulating layer 62 is represented by T5, and the temperature of an outer surface of the second heat insulating layer 62 is represented by T62. The temperature of the second heat insulating layer 62 increases toward the outside from T5 to T62. The temperature of the outer shell 6 is an outer shell temperature T6, and T6 is equal to or higher than T62. Since the temperature difference between T6 and T62 is adequately small, T6 and T61 may be regarded as substantially the temperature in calculation.

The inner tank temperature T4 is maintained at such a temperature that the liquefied hydrogen stored in the inner tank 4 does not vaporize, i.e., at not more than the boiling point of hydrogen. The normal boiling point of hydrogen is -253°C, and the boiling point of hydrogen changes in accordance with the internal pressure of the inner tank 4. The outer shell 6 is exposed to an outside, and the outer shell temperature T6 is substantially equal to an outside air temperature. The outside air temperature used in calculation may be about 27°C. It is desirable that to prevent oxygen in the second region 32 from condensing on the surface of the outer tank 5, the outer tank temperature T5 be higher than the condensation point of oxygen. The temperature T61 of the outer surface of the first heat insulating layer 61 may also be higher than the condensation point of oxygen. The condensation point of oxygen denotes the condensation point of oxygen under the pressure of the second region 32. The condensation point denotes a temperature at which a gas changes into a liquid. The condensation point of oxygen and the boiling point of oxygen are the same temperature. The condensation point of oxygen under the atmospheric pressure, i.e., the normal condensation point of oxygen is -183°C. It is desirable that the temperature T62 of the outer surface of the second heat insulating layer 62 be higher than the dew point temperature of moisture in the second region 32 such that the moisture in the second region 32 does not condense on the outer surface of the second heat insulating layer 62. The dew point temperature changes depending on the humidity of the second region 32 and the like.

The combination of the first heat insulating layer 61 and the second heat insulating layer 62 has the heat insulation performance that realizes the above temperature distribution. Specifically, the combination of the first heat insulating layer 61 and the second heat insulating layer 62 has such heat insulation performance that with the liquefied hydrogen stored in the inner tank 4, the temperature of the outer tank 5 is maintained at a predetermined outer tank control temperature. The temperature of the outer tank 5 constantly changes by a change in a liquid level of the liquefied hydrogen in the inner tank 4, a change in heat input by the variation of the outside air temperature, and the like. Therefore, the outer tank control temperature may be defined as a temperature range having a temperature width. Typically, the temperature of a lower-half portion of the outer tank 5 is lower than the temperature of an upper-half portion of the outer tank 5. Therefore, it is desirable that the heat insulation performance of the first heat insulating layer 61 and the heat insulation performance of the second heat insulating layer 62 be designed such that the temperature of the lower-half portion of the outer tank 5 becomes the outer tank control temperature.

The outer tank control temperature is set to such a temperature that the oxygen gas does not condense on the surface of the outer tank 5. The outer tank control temperature is higher than the condensation point of oxygen and not more than an atmospheric temperature. The outer tank control temperature may be higher than the condensation point of oxygen and not more than an intermediate temperature between the temperature of the inner tank 4 and the temperature of the outer shell 6. However, when the temperature of the outer tank 5 is high, the first heat insulating layer 61 having many restrictions is required to have high heat insulation performance, or the amount of vaporized gas generated from the liquefied hydrogen in the inner tank 4 increases. Therefore, it is desirable that the outer tank control temperature be higher than the condensation point of oxygen and as low as possible. Moreover, it is desirable that since the temperature of the outer tank 5 changes by a change in the atmospheric temperature, a change in the temperature of the inner tank 4, and the like, the outer tank control temperature be set in consideration of such changes. From these viewpoints, the outer tank control temperature may be a temperature higher than the condensation point of oxygen by 1°C to 40°C or may be a temperature higher than the condensation point of oxygen by 5°C to 25°C. Hereinafter, specific examples of numerical values will be described. However, the present disclosure is not limited to these.

In First Example, the temperature of the inner tank 4 is -253°C, and the temperature of the outer shell 6 is 27°C. The outer tank control temperature is -182°C that is higher than the normal condensation point of oxygen by 1°C. In First Example, the first heat insulating layer 61 has such heat insulation performance that the temperature thereof changes in a layer thickness direction in a range of about 70°C from -253°C to -182°C, and the second heat insulating layer 62 has such heat insulation performance that the temperature thereof changes in the layer thickness direction in a range of about 210°C from -182°C to 27°C. Strictly speaking, the heat insulation performance of the first heat insulating layer 61 and the heat insulation performance of the second heat insulating layer 62 are influenced by the heat input from the skirts 25 and the supports 35, and the like. However, when comparing the heat insulation performance of the first heat insulating layer 61 with the heat insulation performance of the second heat insulating layer 62 without considering the components, other than the first heat insulating layer 61 and the second heat insulating layer 62, of the heat protection structure of the liquefied hydrogen tank 3, a ratio of the heat insulation performance of the first heat insulating layer 61 and the heat insulation performance of the second heat insulating layer 62 in First Example is about 1 : 3. The heat insulation performance of the first heat insulating layer 61 and the heat insulation performance of the second heat insulating layer 62 can be shown by, for example, thermal resistance in the wall thickness direction.

In Second Example, the temperature of the inner tank 4 is -253°C, and the temperature of the outer shell 6 is 27°C. The outer tank control temperature is -159°C. In Second Example, the first heat insulating layer 61 has such heat insulation performance that the temperature thereof changes in the layer thickness direction in a range of about 94°C from -253°C to -159°C, and the second heat insulating layer 62 has such heat insulation performance that the temperature thereof changes in the layer thickness direction in a range of about 186°C from -159°C to 27°C. In Second Example, a ratio of the heat insulation performance of the first heat insulating layer 61 and the heat insulation performance of the second heat insulating layer 62 is about 1 : 2.

In Third Example, the temperature of the inner tank 4 is -253°C, and the temperature of the outer shell 6 is 27°C. The outer tank control temperature is -113°C that is an intermediate temperature between the temperature of the inner tank 4 and the temperature of the outer shell 6. In Third Example, the first heat insulating layer 61 has such heat insulation performance that the temperature thereof changes in the layer thickness direction in a range of about 140°C from -253°C to -113°C, and the second heat insulating layer 62 has such heat insulation performance that the temperature thereof changes in the layer thickness direction in a range of about 140°C from -113°C to 27°C. In Third Example, a ratio of the heat insulation performance of the first heat insulating layer 61 and the heat insulation performance of the second heat insulating layer 62 is about 1:1.

It is desirable that the heat insulation performance of the second heat insulating layer 62 be not less than one time the heat insulation performance of the first heat insulating layer 61. Although the heat insulation performance of the first heat insulating layer 61 can be made higher than the heat insulation performance of the second heat insulating layer 62, this is low in efficiency, high in cost, and is not economical.

The liquefied hydrogen tank 3 includes an inspector 8 that inspects whether or not the temperature of the outer tank 5 of the liquefied hydrogen tank 3 is being appropriately managed. As shown in FIG. 4, the inspector 8 includes a processor 801 and a memory 802. The processor 801 executes a predetermined program, stored in the memory 802, to achieve the function of the inspector 8. However, the configuration of the inspector 8 is not limited to the above. The functionality of the inspector 8 may be implemented using circuitry or processing circuitry which includes general purpose processors, special purpose processors, integrated circuits, ASICs ("Application Specific Integrated Circuits"), conventional circuitry and/or combinations thereof which are configured or programmed to perform the disclosed functionality. Processors are considered processing circuitry or circuitry as they include transistors and other circuitry therein. In the disclosure, the circuitry, units, or means are hardware that carry out the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

The inspector 8 is communicably connected to a temperature sensor 81. The temperature sensor 81 detects the temperature of the outer tank 5. Typically, the temperature of the lower-half portion of the outer tank 5 is lower than the temperature of the upper-half portion of the outer tank 5. Therefore, desirably, the temperature sensor 81 detects the temperature of the lower-half portion of the outer tank 5. More desirably, when a portion of the outer tank 5 which is lower in temperature than the other portion of the outer tank 5 is known, the temperature sensor 81 detects the temperature of this portion.

The processor 801 of the inspector 8 acquires a detected value of the temperature of the outer tank 5 from the temperature sensor 81 and compares the detected value with the prestored condensation point of oxygen. Since the pressure in the second region 32 is the atmospheric pressure, the condensation point of oxygen may be the normal condensation point. However, the condensation point of oxygen for comparison may be adjusted in accordance with the pressure in the second region 32. The trouble of the inner tank 4 of the liquefied hydrogen tank 3 can be estimated on the basis that the temperature of the outer tank 5 is not more than the condensation point of oxygen. Examples of the trouble of the inner tank 4 include the leakage of the liquefied hydrogen and the damage of the heat protection structure. When the detected temperature of the outer tank 5 is not more than the condensation point of oxygen, the processor 801 determines that the temperature of the outer tank 5 of the liquefied hydrogen tank 3 is not being appropriately managed. When the detected temperature of the outer tank 5 is higher than the condensation point of oxygen, the processor 801 determines that the temperature of the outer tank 5 of the liquefied hydrogen tank 3 is being appropriately managed. The inspector 8 may compare the detected value of the temperature of the outer tank 5 with the outer tank control temperature. When the detected value of the temperature of the outer tank 5 is not more than the outer tank control temperature, the inspector 8 may determine that the temperature of the outer tank 5 is not being appropriately managed. When the detected temperature of the outer tank 5 is higher than the outer tank control temperature, the inspector 8 may determine that the temperature of the outer tank 5 is being appropriately managed. When the outer tank control temperature is defined as the temperature range, the lower limit of the outer tank control temperature is compared with the detected value of the temperature of the outer tank 5.

The inspector 8 is communicable connected to an outputter 82. Examples of the outputter 82 include an alarm and a monitor display. The processor 801 outputs the result of the determination to the outputter 82. The processor 801 may output the result of the determination to the outputter 82 only when it is determined that there is the trouble. Based on information output from the outputter 82, an operator can take an action corresponding to a case where the temperature of the outer tank 5 of the liquefied hydrogen tank 3 is not being appropriately managed.

As described above, the ship 1 according to the embodiment of the present disclosure includes the liquefied hydrogen tank 3. The liquefied hydrogen tank 3 includes: the inner tank 4 storing the liquefied hydrogen; the outer tank 5 surrounding the inner tank 4; the outer shell 6 surrounding the outer tank 5; the first heat insulating layer 61 located in the first region 31 between the inner tank 4 and the outer tank 5; and the second heat insulating layer 62 located in the second region 32 between the outer tank 5 and the outer shell 6. The first region 31 is filled with the first gas that is the hydrogen gas or the helium gas, and the first region 31 has substantially the atmospheric pressure or is in the low vacuum state. The second region 32 is filled with the second gas including at least one of the inactive gas or the dry air. Then, with the liquefied hydrogen stored in the inner tank 4 of the liquefied hydrogen tank 3, the temperature of the outer tank 5 is the predetermined outer tank control temperature that is higher than the condensation point of oxygen and not more than the atmospheric temperature. In other words, the combination of the first heat insulating layer 61 and the second heat insulating layer 62 has such heat insulation performance that with the liquefied hydrogen stored in the inner tank 4 of the liquefied hydrogen tank 3, the temperature of the outer tank 5 is the predetermined outer tank control temperature that is higher than the condensation point of oxygen and not more than the atmospheric temperature.

In the liquefied hydrogen tank 3, the outer tank control temperature may be higher than the condensation point of oxygen and not more than the intermediate temperature between the temperature of the inner tank 4 and the temperature of the outer shell 6. Or, in the liquefied hydrogen tank 3, the outer tank control temperature may be a temperature higher than the condensation point of oxygen by 1°C to 30°C.

In the liquefied hydrogen tank 3 and the ship 1, while utilizing the second heat insulating layer 62 located in the second region 32 outside the outer tank 5, the first heat insulating layer 61 is located in the first region 31 that is the inter-tank region between the inner tank 4 and the outer tank 5. Therefore, the temperature of the outer tank 5 is maintained at the outer tank control temperature. Oxygen having entered into the second heat insulating layer 62, oxygen having remained at the time of the replacement with the second gas, or oxygen contained in the dry air exist in the second region 32. As above, oxygen exists in the second region 32. However, since the outer tank control temperature is higher than the condensation point of oxygen, the condensation of oxygen on the surface of the outer tank 5 is suppressed, and the generation of liquefied oxygen can be prevented. Moreover, by setting the outer tank control temperature to more than the condensation point of the second gas, the condensation of the second gas on the surface of the outer tank 5 can also be suppressed.

In the liquefied hydrogen tank 3, the heat insulation performance of the second heat insulating layer 62 may be not less than one time and not more than three times the heat insulation performance of the first heat insulating layer 61.

The heat insulation efficiency of the second heat insulating layer 62 located in the second region 32 filled with the second gas lower in heat conductivity than the first gas is higher than the heat insulation efficiency of the first heat insulating layer 61 located in the first region 31 filled with the first gas. Therefore, by the above ratio of the heat insulation performance of the first heat insulating layer 61 and the heat insulation performance of the second heat insulating layer 62, the heat insulation performance is efficiently and economically distributed to the first heat insulating layer 61 and the second heat insulating layer 62.

In the liquefied hydrogen tank 3, the second heat insulating layer 62 may include: an inner surface opposed to the outer tank 5; and an outer surface located away from the inner surface in the wall thickness direction, and with the liquefied hydrogen stored in the inner tank 4, the temperature of the outer surface of the second heat insulating layer 62 may be higher than the dew point temperature of moisture in the second region 32 and not more than the atmospheric temperature.

Moisture contained in the air having entered into the second heat insulating layer 62, moisture contained in the air having remained at the time of the replacement with the second gas, and moisture contained in the dry air exist in the second region 32. As above, the moisture exists in the second region 32. However, since the temperature of the outer surface of the second heat insulating layer 62 is higher than the dew point temperature, the condensation of the moisture on the outer surface of the second heat insulating layer 62 can be prevented.

The liquefied hydrogen tank 3 may further include: the temperature sensor 81 that detects the temperature of the outer tank 5; and the inspector 8 that acquires the detected value of the temperature sensor 81 and outputs a warning when the detected value is not more than the condensation point of oxygen or not more than the outer tank control temperature.

In the liquefied hydrogen tank 3 configured such that the temperature of the outer tank 5 exceeds the condensation point of oxygen, whether or not the temperature of the outer tank 5 of the liquefied hydrogen tank 3 is being appropriately managed can be inspected based on whether or not the temperature of the outer tank 5 is not more than the condensation point of oxygen. Then, when it is determined that the temperature of the outer tank 5 is not being appropriately managed, it may be estimated that there is the trouble of the inner tank 4 of the liquefied hydrogen tank 3. As above, without opening the liquefied hydrogen tank 3, the inspector 8 can estimate the trouble of the inner tank 4 of the liquefied hydrogen tank 3.

The foregoing has described a preferred embodiment. Modifications of specific structures and functional details of the above embodiment may be included in the present disclosure as long as they are within the scope of the present disclosure. The above configuration of the liquefied hydrogen tank 3 may be changed as below, for example.

For example, the liquefied hydrogen tank 3 according to the above embodiment includes two tanks that are the inner tank 4 and the outer tank 5, but may include three or more tanks. In this case, the present disclosure is applicable when an innermost tank is regarded as the inner tank 4, and an outermost tank is regarded as the outer tank 5.

For example, the liquefied hydrogen tank 3 according to the above embodiment is a spherical (or rectangular) tank independent from the hull 2. However, the liquefied hydrogen tank 3 may be a membrane tank that utilizes the hull 2. In this case, by respectively regarding the inner tank 4, the outer tank 5, and the outer shell 6 in the above embodiment as a membrane, an inner shell, and an outer shell (hull), the present disclosure is applicable to the membrane tank.

For example, the liquefied hydrogen tank 3 according to the above embodiment is a cargo tank. However, the liquefied hydrogen tank 3 does not necessarily have to be mounted as the cargo tank on the ship 1 and may be mounted as a fuel tank. Moreover, the number of liquefied hydrogen tanks 3 mounted on the ship 1 is not specified.

For example, in the liquefied hydrogen tank 3 according to the above embodiment, the pressure of the second region 32 is equal to or higher than the pressure of the first region 31. However, the present disclosure is applicable to a so-called pressure accumulating tank in which the pressure of the second region 32 is lower than the pressure of the first region 31, and the pressure of the first region 31 is lower than the pressure in the inner tank 4.

## Claims

1. A liquefied hydrogen tank comprising:
an inner tank storing liquefied hydrogen;
an outer tank surrounding the inner tank;
an outer shell surrounding the outer tank;
a first heat insulating layer located in a first region between the inner tank and the outer tank; and
a second heat insulating layer located in a second region between the outer tank and the outer shell, wherein:
the first region is filled with a first gas that is a hydrogen gas or a helium gas;
the first region has substantially atmospheric pressure or is in a low vacuum state;
the second region is filled with a second gas including at least one of an inactive gas or dry air; and
with the liquefied hydrogen stored in the inner tank, a temperature of the outer tank is a predetermined outer tank control temperature that is higher than a condensation point of oxygen and not more than an atmospheric temperature.

2. The liquefied hydrogen tank according to claim 1, wherein the outer tank control temperature is higher than the condensation point of the oxygen and not more than an intermediate temperature between a temperature of the inner tank and a temperature of the outer shell.

3. The liquefied hydrogen tank according to claim 1, wherein the outer tank control temperature is a temperature higher than the condensation point of the oxygen by 1°C to 40°C.

4. The liquefied hydrogen tank according to any one of claims 1 to 3, wherein heat insulation performance of the second heat insulating layer is not less than one time and not more than three times heat insulation performance of the first heat insulating layer.

5. The liquefied hydrogen tank according to any one of claims 1 to 4, wherein:
the second heat insulating layer includes
an inner surface opposed to the outer tank and
an outer surface located away from the inner surface in a wall thickness direction;
and
with the liquefied hydrogen stored in the inner tank, a temperature of the outer surface of the second heat insulating layer is higher than a dew point temperature of moisture in the second region and not more than the atmospheric temperature.

6. The liquefied hydrogen tank according to any one of claims 1 to 5, further comprising:
a temperature sensor that detects the temperature of the outer tank; and
an inspector that acquires a detected value of the temperature sensor and outputs a warning when the detected value is not more than the condensation point of the oxygen or not more than the outer tank control temperature.

7. A ship comprising the liquefied hydrogen tank according to any one of claims 1 to 6.
